**Europäisches Patentamt**

**European Patent Office**

**Office européen des brevets**

(11) Publication number: **0 191 323 B1**

# EUROPEAN PATENT SPECIFICATION

(45) Date of publication of the patent specification:
12.04.89

(51) Int. Cl.⁴: **G11B 5/72, G11B 5/842**

(21) Application number: **86100771.4**

(22) Date of filing: **21.01.86**

(54) **Magnetic recording disk and method of fabricating same.**

(30) Priority: **11.02.85 US 700432**

(43) Date of publication of application:
**20.08.86 Bulletin 86/34**

(45) Publication of the grant of the patent:
**12.04.89 Bulletin 89/15**

(84) Designated Contracting States:
**BE CH DE FR GB IT LI NL SE**

(56) References cited:
**EP-A- 0 086 343**
**CH-A- 349 097**
**FR-A- 1 119 077**

**PATENTS ABSTRACTS OF JAPAN, vol. 3,
no. 15 (E-89), 9th February 1979; &
JP-A-53 143 206 (NIPPON DENKI K.K.)**

(73) Proprietor: **International Business Machines
Corporation, Old Orchard Road, Armonk, N.Y. 10504(US)**

(72) Inventor: **Hilden, Magdalena Maria, 100 Merrill Road, San
Juan Bautista Cailfornia 95045(US)**
Inventor: **Lee, Jia-Kuen Jerry, 145 Skowhegan Ct., San
Jose California 95130(US)**
Inventor: **Wu, Anthony Wal, 465 1/2 Curie Drive, San Jose
California 95123(US)**

(74) Representative: **Hobbs, Francis John, IBM United
Kingdom Limited Intellectual Property Department
Hursley Park, Winchester Hampshire SO21 2JN(GB)**

Note: Within nine months from the publication of the mention of the grant of the European patent, any person may give notice to
the European Patent Office of opposition to the European patent granted. Notice of opposition shall be filed in a written reasoned
statement. It shall not be deemed to have been filed until the opposition fee has been paid (Art. 99(1) European patent
convention).

ACTORUM AG

## Description

This invention relates to a magnetic recording disk having a dispersion of magnetic particles within a cured organic binder as a magnetic coating on a disk substrate, and to a method of fabricating same.

A magnetic recording disk of the particulate media type has a substrate with a coating of magnetic particles dispersed in an organic binder. The organic binder typically includes various polymers, such as a blend of epoxy and phenolic resins, solvents, dispersants to aid in the dispersion of the magnetic particles in the binder, and flow agents to facilitate the subsequent spin coating of the disk substrate. After the disk has been cured, a liquid lubricant is then applied to the coating to facilitate movement of the read/write head over the disk surface during start and stop operations of the disk file. Some particulate magnetic recording disks also incorporate load-bearing particles, such as alumina ($Al_2O_3$), into the organic binder to increase the durability of the coating and prevent damage to the disk from impact from the read/write head. While the most common type of particulate recording disk is for horizontal recording, in which the magnetic axes of the particles are aligned parallel to the plane of the disk, particulate disks may also be fabricated for vertical recording by having the magnetic axes of the particles oriented perpendicular to the plane of the disk.

The use of a liquid lubricant on the disk presents disadvantages. If the disk is under-lubricated there may be too much friction between the disk and the read/write head, which results in increased wear to the disk and head. On the other hand, if the disk is over-lubricated, it becomes difficult for the head to break loose from the disk at start-up of the disk file.

The use of alumina or other load-bearing particles in the coating likewise presents disadvantages. Because the alumina lends non-homogeneity to the coating, there is an increased number of magnetic defects, such as missing bits. Also, because the alumina particles are located close to the disk surface in order to accomplish their load bearing function, they are often forced out of the disk surface and thus create disk asperities. If it is desired to fly the head at a relatively low flying height, then the presence of asperities requires an additional step in the fabrication process, namely a smoothing or burnishing of a disk surface by a burnishing head which flies at a substantially reduced flying height to shear off the asperities. Despite the removal of the asperities, the alumina particles often move out of the disk coating and above the flying height of the read/write head during operation, which can cause the head to crash into the disk surface.

FR-A 1 119 077 discloses the use of a thin layer of graphite on a magnetic coating consisting of magnetic particles in an organic binder, for example a polyurethane binder.

The invention is an improved particulate magnetic recording disk having a thin film of carbon sputter-deposited as an overcoat on the magnetic coating, and a process for fabricating such a disk. The carbon film eliminates the necessity for lubricant and load bearing particles and their associated problems and disadvantages.

The use of a sputter-deposited carbon film as a protective overcoat for thin film alloy magnetic recording disks is disclosed in EP-A 26 496. An adhesion layer, such as a sputtered film of titanium, is required between the magnetic film and the carbon overcoat in such thin film alloy disks. It is believed that the sputter-deposition of protective overcoats on particulate magnetic recording disks has not previously or successfully been achieved for several reasons. First, the organic binder includes numerous substances, such as solvents, dispersants and flow agents, which may cause out-gassing into the high-vacuum environment of the sputtering chamber. This would be especially true if the organic coating were not fully-cured. The out-gassing problem does not exist in the case of thin film alloy disks. Secondly, because the coefficient of expansion of most organic coatings is substantially different than that of most suitable overcoats, substantial localized temperature gradients caused by the recording head contacting the disk, either inadvertently or during start and stop of the disk file, may cause delamination of the overcoat from the underlying organic coating. In a thin film alloy disk, the difference in coefficients of expansion between the magnetic film, the adhesion layer and the carbon overcoat is much less.

A typical magnetic coating formulation for a particulate magnetic recording disk includes magnetic particles, such as particles of $\gamma$-Fe$_2$O$_3$ or Co-doped $\gamma$-Fe$_2$O$_3$, within an organic binder. The binder typically includes heat-hardenable polymers (such as epoxy or phenolic resins or combinations thereof, polyurethanes or acrylates), solvents, dispersing agents and flow agents. The magnetic particles are first placed in a media mill or ball mill to break up agglomerations and further enhance the dispersion of the particles, and then mixed in the organic binder. If load-bearing particles, such as alumina, are to be used in the coating, they are also mixed into the coating formulation.

The resultant formulation is then applied as a coating to the disk substrate, such as a highly polished aluminium-magnesium alloy disk, by pouring it onto the substrate while it is spinning. A magnetic field is applied to the spinning substrate to orient the magnetic particles within the coating so that the particles are correctly aligned. The disk is then placed in a curing oven to cross-link the polymers in the organic binder and thus harden the disk coating. Following curing, the disk coating is buffed and then washed to remove any debris. A liquid lubricant, such as a perfluoroalkyl polyether, is then applied to the disk and absorbed into the coating to provide lubrication between the head and disk when the flying head comes to rest on the disk surface when disk rotation stops. If it is desired to burnish the disk, then this is done after washing and before the application of the lubricant.

The improvement to the above-described particulate recording disk and to the method for its fabrication is a carbon film sputter-deposited on the magnetic coating of the cured disk. In one example of the process for forming the carbon layer as an overcoat on the particulate disk, the carbon film was sputter-deposited onto a conventional particulate disk which had as a magnetic coating $\gamma$-Fe$_2$O$_3$ particles dispersed in an epoxy/phenolic resin binder including alumina particles. The disk was fully cured and burnished, but no lubricant was applied. The thickness of the magnetic coating was approximately 25 microinches. The carbon film was applied to this disk by conventional DC planar magnetron sputtering, a process well known in the art and described in Thin Film Processes, Academic Press, Vossen, John L., and Kern, Werner, Eds., 1978, pp. 131–173. The target cathode was hard-pressed high-purity graphite. The current was maintained at 1.6 amps at a voltage of 850 volts and the pressure of the Argon gas in the sputtering chamber was 0.5332896 pascals (4 millitorrs). No external heating was applied to the disk. With these parameters a 25nm layer of carbon was deposited in 5 minutes.

A relatively large number of carbon films were sputter-deposited on disks with various organic coatings at currents of between 1.6 to 2 amps, voltages of between 650 to 800 volts and Argon pressures in the range of 0.5332896 to 1.333224 pascals (4 to 10 millitorrs). The following tables illustrate the durability and frictional properties of representative examples of disks having carbon films sputter-deposited according to the above-described process.

Table 1. Durability testing of carbon films

| Example | 1 | 2 | 3 | 4 | 5 | 6 |
|---|---|---|---|---|---|---|
| Binder | epoxy/ phenolic | epoxy/ phenolic | epoxy/ phenolic | epoxy/ phenolic | epoxy/ phenolic | epoxy/ urethane |
| Magnetic Particles Type | $\gamma$-Fe$_2$O$_3$ | $\gamma$-Fe$_2$O$_3$ | Silicated Co-doped $\gamma$-Fe$_2$O$_3$ | Co-doped $\gamma$-Fe$_2$O$_3$ | Co-doped $\gamma$-Fe$_2$O$_3$ | Co-doped $\gamma$-Fe$_2$O$_3$ |
| Al$_2$O$_3$ (Percent by Vol.)//Avg. diam.) | 2%/1 $\mu$ | 2%/1 $\mu$ | 1%/0.5 m | None | 1%/0.5 m | 1%/0.5 m |
| Carbon Film Thickness | 10 nm | 50 nm | 10 nm | 20 nm | 20 nm | 10 nm |
| Start/Stop Cycles to Failure (Lubricated) | Not Available | Not Available | 1,000–20,000 | 0 | 1,000–20,000 | <2,000 |
| (With Carbon Film) | >20,000 | >20,000 | >20,000 | >20,000 | >20,000 | >20,000 |

Table 2. Measured friction coefficients

| Disk Type | Lubricated | | Carbon Film (20 nm Thick) | |
|---|---|---|---|---|
| | Static | Dynamic | Static | Dynamic |
| Epoxy/phenolic with Al$_2$O$_3$ (1%/0.5 $\mu$) | 0.16 | 0.26–0.53 | 0.15 | 0.15–0.30 |
| | 0.29 | 0.29–0.51 | 0.17 | 0.17–0.39 |
| Epoxy/phenolic with Al$_2$O$_3$ (2%/1 $\mu$) | 0.20 | 0.20–0.57 | 0.17 | 0.17–0.40 |
| Epoxy/phenolic without Al$_2$O$_3$ | 0.35 | 0.35–0.87 | 0.17 | 0.17–0.39 |

The start/stop test conducted on the examples of Table 1 is a durability test in which one cycle comprises starting rotation of the disk with the slider resting on the disk surface until the slider reaches its flying height and then stopping rotation of the disk and allowing the slider to come to rest on the disk surface. In all disks tested, the testing was stopped after 20,000 cycles since there was no failure of any of the carbon films.

Table 2 illustrates the significant improvement in measured static and dynamic coefficients of friction of disks with various types of coatings and a 20nm thick carbon overcoat versus disks with a conventional lubricant. All disks with a carbon overcoat also showed a significant improvement over disks with a conventional lubricant in terms of measured stiction force, i.e. the amount of force required to cause the slider to break free from the disk surface at start-up.

The disks with the carbon overcoat sputter-deposited according to the process of this invention showed no significant degradation of any magnetic properties. Numerous disks were tested for missing bits before and after application of the carbon overcoat. The results of such testing indicated no significant change in measured missing bits in the magnetic coating. In addition, the measured average signal amplitude from the disks before and after application of the carbon overcoat showed a reduction of only approximately 1 to 3 percent for carbon overcoat thicknesses in the range of 10 to 25nm.

Carbon overcoats have also been formed on disk coatings which included no load-bearing particles. The carbon films deposited exhibited sufficient durability so as to make the load-bearing particles unnecessary, as shown by Example 4 in Table 1.

Electron microphotographs of the carbon films deposited in these examples showed essentially an amorphous structure with no long range crystalline ordering. The carbon films also demonstrated excellent adhesion to the magnetic coating with no delamination during buffing tests. In all examples no outgassing from the organic coatings was observed during the sputtering process, as might have been expected when the coatings were subjected to high vacuum in the sputtering chamber. In addition, since the carbon overcoat is conformal to the underlying organic coating and is deposited as a film of uniform thickness, the disks showed excellent smoothness.

## Claims

1. A magnetic recording disk comprising a coating of magnetic particles dispersed in a cured organic binder on a substrate, characterized by a carbon film sputter-deposited over the coating.

2. A disk according to claim 1, in which the disk coating includes no load-bearing particles dispersed therein.

3. A disk according to claim 1 or 2, in which the carbon film is 10 to 50 nm thick.

4. A method of fabricating a magnetic recording disk, which includes preparing a dispersion of magnetic particles in a curable organic binder, applying the binder over a suitable substrate to form a magnetic coating and fully curing the coating, characterized by sputter-depositing a film of carbon over the fully cured coating, whereby the durability and lubricity of the disk are enhanced.

5. A method according to claim 4, in which the carbon film is 10 to 50 nm thick.

6. A method according to claim 4 or claim 5, including the steps, prior to forming the carbon layer, of buffing, washing, and burnishing the cured coating on the substrate.

## Patentansprüche

1. Magnetische Aufzeichnungsplatte mit einem Überzug aus magnetischen Teilchen, die in einem ausgehärteten organischen Binder dispergiert sind, auf einem Substrat, gekennzeichnet durch einen über dem Überzug sputter-abgeschiedenen Kohlenstoffilm.

2. Platte nach Anspruch 1, bei welcher der Plattenüberzug keine in ihm dispergierten tragenden Teilchen enthält.

3. Platte nach Anspruch 1 oder 2, bei welcher der Kohlenstoffilm 10 bis 50 nm dick ist.

4. Verfahren zur Herstellung einer magnetischen Aufzeichnungsplatte, welches das Herstellen einer Dispersion von magnetischen Teilchen in einem aushärtbaren organischen Binder, das Aufbringen des Binders auf einem geeigneten Substrat zur Ausbildung eines magnetischen Überzugs und das volle Aushärten des Überzugs umfaßt, gekennzeichnet durch ein Sputter-Abscheiden eines Kohlenstoffilms auf dem voll ausgehärteten Überzug, wodurch die Dauerhaftigkeit und Schmierfähigkeit der Platte vergrößert werden.

5. Verfahren nach Anspruch 4, bei welchem der Kohlenstoffilm 10 bis 50 nm dick ist.

6. Verfahren nach Anspruch 4 oder 5, welches vor dem Ausbilden der Kohlenstoffschicht die Verfahrensschritte des Schwabbelns, Waschens und Polierens des ausgehärteten Überzugs auf dem Substrat umfaßt.

## Revendications

1. Un disque d'enregistrement magnétique comportant un revêtement de particules magnétiques dispersées dans un liant organique durci sur un substrat, caractérisé par un film de carbone déposé par pulvérisation sur le revêtement.

2. Le disque de la revendication 1, dans lequel le revêtement du disque ne comprend aucune particule d'appui de charge qui s'y trouve dispersée.

3. Le disque de l'une de revendications 1 ou 2, dans lequel le film de carbone a une épaisseur comprise entre 10 et 50 nm.

4. Un procédé de fabrication d'un disque d'enregistrement magnétique, comprenant la préparation d'une dispersion de particules magnétiques dans un liant organique durcissable, l'application du liant sur un substrat approprié de manière à former un revêtement magnétique et le durcissement complet du revêtement, caractérisé par le dépôt par pulvérisation d'un film de carbone sur le revêtement entièrement durci, de manière à améliorer la durée de vie et la lubrification du disque.

5. Le procédé de la revendication 4, dans lequel le film de carbone a une épaisseur comprise entre 10 et 50 nm.

6. Le procédé de l'une des revendications 4 ou 5, comprenant, avant la formation de la couche de carbone, les étapes de polissage, de lavage et de lustrage du revêtement durci sur le substrat.